# EUROPEAN PATENT SPECIFICATION

(11) **EP 3 198 894 B1**
(45) Date of publication and mention of the grant of the patent: **22.04.2020**
(21) Application number: 15757400.5
(22) Date of filing: 21.08.2015
(51) Int. Cl.: H04W 4/50, H04W 4/02, H04W 76/14, H04W 64/00, H04W 92/18

(54) **RESOURCE ALLOCATION AND USE FOR DEVICE-TO-DEVICE ASSISTED POSITIONING IN WIRELESS CELLULAR TECHNOLOGIES**
RESSOURCENZUWEISUNG UND -VERWENDUNG ZUR VORRICHTUNG-ZU-VORRICHTUNG-UNTERSTÜTZTEN POSITIONIERUNG IN DRAHTLOSEN ZELLULAREN TECHNOLOGIEN
ATTRIBUTION ET UTILISATION DE RESSOURCES POUR LOCALISATION ASSISTÉE PAR COMMUNICATION DE DISPOSITIF À DISPOSITIF DANS DES TECHNOLOGIES CELLULAIRES SANS FIL

(30) Priority: 25.09.2014 US 201462055053 P; 27.03.2015 US 201514671813
(43) Date of publication of application: 02.08.2017
(73) Proprietor: Intel Corporation, Santa Clara, CA 95054 (US)
(72) Inventor: KHORYAEV, Alexey, Nizhny Novgorod NIZ 603105 (RU); PANTELEEV, Sergey, Nizhny Novgorod NIZ 603065 (RU); SHILOV, Mikhail, Nizhny Novgorod NIZ 603054 (RU); SOSNIN, Sergey, Zavolzhie NIZ 606520 (RU); TANG, Yang, Santa Clara, CA 95054 (US)
(74) Representative: Barnfather, Karl Jon
(86) International application number: PCT/US2015/046334
(87) International publication number: WO 2016/048510

(56) References cited:
- WO-A1-2013/139041
- US-A1- 2013 045 759
- US-A1- 2013 157 676

## Description

### BACKGROUND

Wireless networks provide network connectivity, through radio interfaces, to mobile communication devices, such as smart phones. In wireless networks, positioning services, that determine the location of a communication device, can be a desirable feature. For instance, determining the location of a mobile device can be important when providing navigation services, emergency services, or other services that may be provided for the mobile device.

Accurately determining the position of a mobile device, in a variety of different situations/environments, can be challenging. In specifications published by the 3^{rd} Generation Partnership Project (3GPP), three major device positioning services are described: Enhanced Cell ID (ECID); Assisted Global Navigation Satellite Systems (A-GNSS); and downlink Observed Time Difference of Arrival (OTDOA). However, obtaining accurate positioning using wireless technologies suffers from multiple challenges that can result, in many situations, in coarse location accuracy. The challenges may include poor performance in indoor environments due to high penetration loss and the Non-Line-of-Sight (NLOS) nature of signal propagation from the sources of positioning signals.

US2013/045759 describes a method and apparatus for generating enhanced location information for mobile devices by using D2D communication with neighbouring network devices.

### BRIEF DESCRIPTION OF THE DRAWINGS

Embodiments of the present invention will be readily understood by the following detailed description in conjunction with the accompanying drawings. To facilitate this description, like reference numerals may designate like structural elements. Embodiments of the invention are illustrated by way of example and not by way of limitation in the figures of the accompanying drawings.
Fig. 1 is a diagram of an example environment in which systems and/or methods described herein may be implemented;
Fig. 2 is a flowchart illustrating an example process for performing location determination using Device-To-Device (D2D) communications with assistance of a cellular wireless network;
Fig. 3 is a diagram that graphically illustrates the relationship of a number of the above-discussed parameters that may be used to define a D2D positioning zone;
Figs. 4 and 5 are diagrams that conceptually illustrate a Type 1 location beacon;
Figs. 6 and 7 are diagrams that conceptually illustrate a Type 2 location beacon; and
Fig. 8 is a diagram of example components of a device.

### DETAILED DESCRIPTION OF PREFERRED EMBODIMENTS

The invention is defined by the appended claims.

Techniques described herein may provide for the determination of the position of mobile devices based on information obtained through device-to-device (D2D) communications. The D2D communications, which may be referred to as "Sidelink communications" or "Sidelink channels" herein, may be performed between devices that are also attached to a cellular network. Resource allocation schemes, which may be set by the cellular network, are described that allow efficient communication of signal location parameters, via D2D communications, that may be used estimate the position (or improve position estimation) of the mobile device.

In one implementation, and consistent with aspects described herein, a UE may include processing circuitry to: connect with a cellular network; detect or connect with one or more additional UEs to form a direct connection with the one or more additional UEs; receive, from the cellular network, information allocating a portion of radio spectrum resources, as radio spectrum resources that are dedicated to exchanging signal location parameters that relate to information relevant to UE location determination; receive, via the direct connection with the one or more additional UEs and using the allocated portion of the radio spectrum resources, one or more of the signal location parameters; and determine, based on the received one or more of the signal location parameters, a location of the UE.

In some implementations, the information allocating the portion of the radio spectrum resources may define a periodically occurring D2D positioning zone that is represented by: a Zone Period value that relates to a period with which the D2D positioning zone occurs, the Zone Period being defined with respect to a System Frame Number (SFN) of a cell of the cellular network; and a Zone Start Offset value that relates to an offset relative to an instance of the Zone Period. The periodically occurring D2D positioning zone may be additionally represented by: a Sub-frame Bitmap that indicates particular sub-frames that are to be used to exchange the signal location parameters; and a Zone End Offset value that indicates an ending location of the Sub-frame Bitmap.

In some implementations, the information allocating the portion of the radio spectrum resources may define a periodically occurring D2D positioning zone, and wherein the signal location parameters are received as part of location beacons that are transmitted using the D2D positioning zones. Alternatively or additionally, the D2D positioning zone maybe defined during D2D discovery, using D2D control or data resources, or using cellular uplink or downlink spectrum resources. Alternatively or additionally, the location beacons may each include: signal location parameters that are encoded in payload data; and demodulation reference signals that are used to decode the payload data.

In some implementations, the signal location parameters that are encoded in the payload data include: geographic coordinate information; identification information of cells associated with the cellular network; information relating to signal transmit power; movement characteristics of the UE; measurements of signal location parameters; transmission/reception timestamps; or information relating to a system reference time. Alternatively or additionally, the location beacons may each include: signal location parameters that are encoded in payload data; demodulation reference signals that are used to decode the payload data; and positioning reference signals that carry signal location parameters that relate to timing of propagation of radio signals and that are represented by demodulation reference signals, sounding reference signals, Physical Random Access Channel (PRACH) signals, or downlink cell specific reference signals.

In another possible implementation, a UE may include: at least one radio transceiver; a computer-readable medium to store processor executable instructions; and processing circuitry to execute the processor executable instructions to: connect, using the at least one radio transceiver, with a second UE, that is in proximity to the UE, via a Sidelink channel; connect, via the at least one radio transceiver, with a cellular network; and transmit, via the Sidelink channel, location beacons that include signal location parameters that relate to information relevant to UE location determination, the location beacons being transmitted using designated radio spectrum resources, the location beacons including at least one of: positioning reference signals that communicate signal location parameters that are determined based on timing of propagation of radio signals, or payload data that encodes the signal location parameters.

In another implementation, a UE-implemented method may include: connecting with a cellular network; connecting with a one or more additional mobile devices via Sidelink connections with the one or more additional UEs; receiving, from the cellular network, information allocating a portion of radio spectrum resources, as radio spectrum resources that are dedicated to exchanging signal location parameters that relate to information relevant to mobile device location determination; receiving, via one of the Sidelink connections and using the allocated portion of the radio spectrum resources, one or more of the signal location parameters; and determining, based on the received one or more of the signal location parameters, a location of the mobile device.

In some implementations, determining the location of the mobile device includes transmitting the received one or more of the signal location parameters to a location server.

In another implementation, a UE may comprise: means for connecting with a cellular network; means for connecting with one or more additional mobile devices via Sidelink connections with the one or more additional UEs; means for receiving, from the cellular network, information allocating a portion of radio spectrum resources, as radio spectrum resources that are dedicated to exchanging signal location parameters that relate to information relevant to mobile device location determination; means for receiving, via one of the Sidelink connections and using the allocated portion of the radio spectrum resources, one or more of the signal location parameters; and means for determining, based on the received one or more of the signal location parameters, a location of the mobile device.

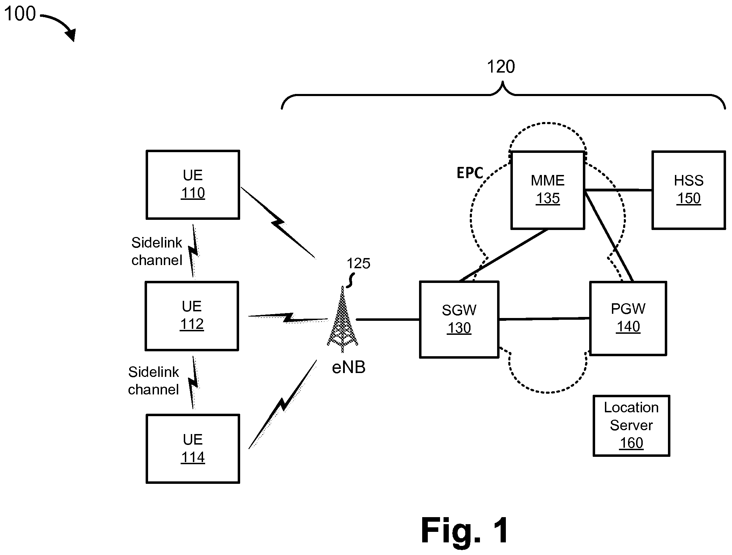

Fig. 1 is a diagram of an example environment 100 in which systems and/or methods described herein may be implemented. As illustrated, environment 100 may include UEs 110, 112, and 114. Although three UEs are illustrated in Fig. 1, in practice, environment 100 may include more or fewer UEs.

Environment 100 may also include wireless network 120. Wireless network 120 may include one or more networks that provide wireless network connectivity to UEs 110-114. For example, wireless network 120 may represent a wireless network that provides cellular wireless coverage. In some implementations, wireless network 120 may be associated with a 3GPP/Long Term Evolution (LTE) based-network. Wireless network 120 may include a Radio Access Network (RAN) that includes one or more base stations 125 and an evolved packet core (EPC). In the context of an LTE-based network, base station 125 may be referred to as an evolved nodeB (eNB). The EPC may include serving gateway (SGW) 130, mobility management entity (MME) 135, and packet data network gateway (PGW) 140. Home Subscriber Server (HSS) 150 and location server 160, which may be associated with the EPC, wireless network 120, or with an external network, are also illustrated in Fig. 1.

UEs 110-114 may each include a portable computing and communication devices, such as a personal digital assistant (PDA), a smart phone, a cellular phone, a laptop computer with connectivity to a cellular wireless network, a tablet computer, etc. UEs 110-114 may also include non-portable computing devices, such as desktop computers, consumer or business appliances, or other devices that have the ability to connect to wireless network 120. UEs 110-114 may connect, through a radio link, to wireless network 120.

UEs 110-114 may include radio interfaces that allow UEs 110-114 to connect (or detect), via direct wireless connections, to one another. For example, UEs 110-114 may each include a first radio transceiver to connect to a cellular access network, such as a 3GPP/Long Term Evolution (LTE) based-network (i.e., wireless network 120), and a second radio transceiver to form D2D communication channels with other UEs. UEs 110-114 may discover one another through direct discovery or with the assistance of wireless network 120. UEs 110-114 may then connect directly to one another (e.g., via an Evolved Universal Terrestrial Radio Access (E-UTRA) direct communication path that does not use wireless network 120) to engage in direct D2D communications via a Sidelink channel. In some implementations, control information, such as information relating to discovery and pairing of UEs 110-114, may be communicated to UEs 110-114 via wireless network 120. Thus, wireless network 120 (e.g., a cellular network) may assist in the creation and/or management of the Sidelink channels.

UEs 110-114 may correspond to user wireless terminals, such as smart phones or other devices that are carried by customers of a wireless cellular provider (e.g., a wireless cellular provider that operates wireless network 120). Alternatively or additionally, UEs 110-114 may include fixed devices that are installed by the operator of wireless network 120 or by another party. In this situation, UEs 110-114 may be "anchor" terminals that have known locations and that are designed to assist other UEs in location determination. In some implementations, anchor terminals may include devices such as smart meters, advertisement devices providing advertisement in shopping malls, or other devices for which location determination assistance is not the primary function.

eNB 125 may include one or more network devices that receive, process, and/or transmit traffic destined for and/or received from UEs 110-114. eNB 125 may provide the wireless (i.e., radio) interface between wireless network 120 and UEs 110-114.

SGW 130 may include one or more network devices that route data of a traffic flow. SGW 130 may aggregate traffic received from one or more eNBs 125 and may send the aggregated traffic to an external network via PGW 140. SGW 130 may also act as a mobility anchor during inter-base station handovers.

MME 135 may include one or more computation and communication devices that act as a control-node for eNB 125 and/or other devices that provide the air interface for wireless network 120. For example, MME 135 may perform operations to UEs 110-114 with wireless network 120, to establish bearer channels (e.g., traffic flows) associated with a session with UEs 110-114, to hand off UEs 110-114 to another network, and/or to perform other operations. MME 135 may perform policing operations on traffic destined for and/or received from UEs 110-114.

PGW 140 may include one or more network devices that may aggregate traffic received from one or more SGWs 130, and may send the aggregated traffic to an external network. PGW 140 may also, or alternatively, receive traffic from the external network and may send the traffic toward UEs 110-114, via SGW 130, and/or eNB 125.

HSS 150 may include one or more devices that may manage, update, and/or store, in a memory associated with HSS 150, profile information associated with a subscriber. The profile information may identify applications and/or services that are permitted for and/or accessible by the subscriber; a mobile directory number (MDN) associated with the subscriber; bandwidth or data rate thresholds associated with the applications and/or services; and/or other information. The subscriber may be associated with UEs 110-114. Additionally, or alternatively, HSS 150 may perform authentication, authorization, and/or accounting operations associated with the subscriber and/or a communication session with UEs 110-114.

Location server 160 may represent functionality, implemented by one or more network devices, to perform position determination functions for UEs 110-114. For example, location server 160 may receive and store parameters, relating to location determination, from UEs 110-114, eNBs 125, or from other devices. Some network devices may be located at a fixed, known location. For example, eNBs 125 and anchor terminals may be installed at a fixed location. Location server 160 may store the locations of these devices. Location server 160 may periodically or occasionally calculate the locations of UEs 110-114 and maintain an up-to-date data structure that indicates the current positions of UEs 110-114. Based on the parameters, and based on the known locations of various devices, location server 160 may determine the current location of a target UE, such as one of UEs 110-114, using location calculation techniques, such as multilateration-based techniques. Location server 160 may be implemented as part of the EPC or external to the EPC.

The quantity of devices and/or networks, illustrated in Fig. 1, is provided for explanatory purposes only. In practice, there may be additional devices and/or networks; fewer devices and/or networks; different devices and/or networks; or differently arranged devices and/or networks than illustrated in Fig. 1. Alternatively, or additionally, one or more of the devices of environment 100 may perform one or more functions described as being performed by another one or more of the devices of environment 100.

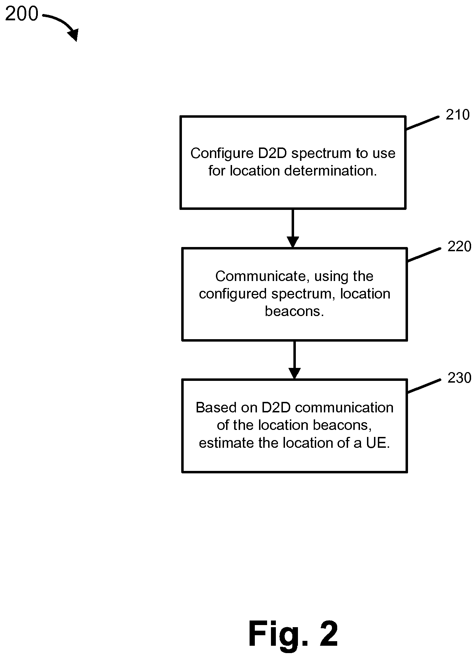

Fig. 2 is a flowchart illustrating an example process 200 for performing location determination using D2D communications with the assistance of a cellular wireless network.

Process 200 may include configuring spectrum, in the D2D communications (i.e., in the Sidelink channels), to use for location determination (block 210). For example, UEs 110-114 may be configured to use certain Long Term Evolution (LTE) frames and/or sub frames in which signal location parameters may be exchanged. In one implementation, the configuration information may be broadcast, or otherwise transmitted, via wireless network 120, to UEs 110-114. The configuration information may serve to allocate spectrum resources, associated with the Sidelink channels, through which signal location parameters may be transmitted.

A "signal location parameter," as used herein, may refer to any parameter that may be used as a factor in determining the location of a UE. Signal location parameters may be communications through signals transmitted between base station 125 and UEs 110-114 and/or signals transmitted via Sidelink channels between UEs 110-114. A non-exhaustive list of possible signal location parameters includes: signal time of arrival (TOA), time of flight, time difference of arrival (TDOA), reference signal time difference, angle of arrival, angle of departure, received reference signal quality, reference signal received power, coordinates of the reference or anchor nodes, information relating to eNBs, transmit time offset between eNBs or UEs, metrics characterizing accuracy of timing measurements, identities of serving, reference and neighboring cells, GNSS assistance information, time stamps, counter information, expected time of arrival window, or other information. In some implementations, signal location parameters may be communicated, over Sidelink channels and between UEs, without the UEs explicitly connecting with one another. For example, a UE may detect a reference signal, on a Sidelink channel, that is transmitted by another UE.

In one implementation, the D2D spectrum may be configured so that the signal location parameters are transmitted with relatively low duty cycles (i.e., relatively long periods in between transmission of the signal location parameters) to facilitate energy efficient processing at the UE transmitter and receiver. Low duty cycles may enable energy efficient processing by allowing the UE to switch off transceiver circuitry in situations in which the UE is only interested in using the Sidelink channel for positioning. For example, a dedicated anchor terminal that is battery-powered may go into a low power usage state when signal location parameters are not scheduled to be transmitted or received. Additionally, transmitting the signal location parameters with a relatively low duty cycle may provide relatively large bandwidth for other applications to use the D2D spectrum.

The portions of the D2D spectrum allocated to exchange signal location parameters may be referred to as the "D2D positioning zone" herein. The number of subframes and/or physical resource blocks (PRBs) in the D2D positioning zone may be configurable, such as by wireless network 120. Within the D2D positioning zone, time and frequency domain allocations may be organized in a way that increases the number of received signals during the D2D positioning zone. For example, the D2D positioning zone may be organized based on the use of maximal matching theory and greedy resource selection algorithms.

In one implementation, the D2D positioning zone may be allocated periodically by wireless network 120, such as by eNBs 125 and as part of the allocation of PRBs. The configuration of D2D positioning zones may be communicated between neighboring eNBs 125 or cells to facilitate inter-cell D2D location determination. As an example, in one implementation, the configuration of the D2D positioning zones may be aligned across a whole network and coordinated through back haul interfaces.

A number of parameters may be used to define the D2D positioning zone. These parameters may include:
- *Zone Period.* The period over which the D2D positioning zone may be allocated in a cell. In one implementation, Zone Period may be defined as a number of frames. For example, the D2D positioning zone may occur every *X* number of frames, where X is an integer (e.g., 21, 64, 128, 256, 512, 1024, etc.). The Zone Period parameter may be relevant to resource pools of a serving cell and a neighboring cell. The start of the Zone Period may be defined with respect to System Frame Number (SFN) zero of the serving cell. Higher values for the Zone Period may correspond to a longer duty cycle and reduced spectrum usage by the location determination process.
- *Zone Start Offset.* An offset indicator within an instance of a Zone Period. Zone Start Offset may be specified as a number of frames or sub-frames, offset from the boundary of a Zone Period, where a Sub-frame Bitmap (see below) starts. This parameter may be relevant to the resource pool of the serving cell.
- *Zone End Offset.* An offset indicator that indicates where the Sub-frame Bitmap ends. This parameter may be relevant to the resource pool of the serving cell.
- *Sub-frame Bitmap.* A bitmap, or other data structure or representation, indicating particular sub-frames that have resources reserved for D2D location determination. The bitmap may refer to the set of sub-frames that start after the offset indicated by Zone Start Offset. In some implementations, the bitmap can be repeated multiple times within an instance of Zone Period. This parameter may be relevant to the resource pool of the serving cell.
- *Number of Sub-frame Bitmap Repetitions.* The number of times the Sub-frame Bitmap is repeated within an instance of Zone Period. This parameter may be relevant to the resource pool of the serving cell.
- *Number of Zone PRBs.* This parameter may define the length of the D2D positioning zone allocation with respect to PRBs. This parameter may be relevant to the positioning zone of the serving cell.
- *Zone Start PRB.* Transmissions on a sub-frame may occur on PRBs that have an index value greater than or equal to this value and less than Zone Start PRB plus Number of Zone PRBs. Zone Start PRB may be needed to avoid collision between Physical Uplink Control Channel (PUCCH) and/or during D2D discovery and may be needed to allow frequency division multiplexing between different resource pools. This parameter may be relevant to the serving cell.
- *Zone End PRB.* The transmissions on a sub-frame may occur on PRBs that have an index value greater than or equal to this value and greater than Zone End PRB plus Number of Zone PRBs. Zone End PRB may be needed to avoid collision between PUCCH and/or during D2D discovery and may be needed to allow frequency division multiplexing between different resource pools. This parameter may be relevant to the resource pool of the serving cell.

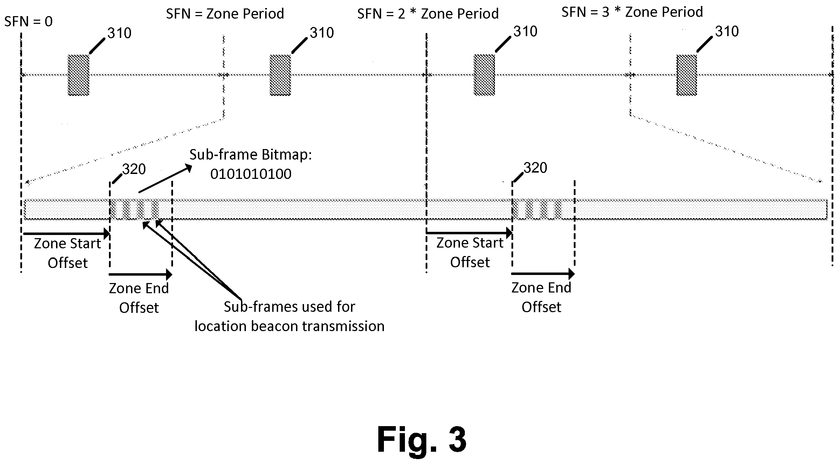

Fig. 3 is a diagram that graphically illustrates the relationship of a number of the above-discussed parameters that may be used to define the D2D positioning zone. As illustrated, a number of D2D positioning zones 310 (each covering one or more sub-frames) may be periodically defined as having a period equal to Zone Period, in which the first Zone Period begins with SFN equal to zero. The Zone Period "boundaries" are illustrated in Fig. 3 using dashed vertical lines. As is further illustrated in Fig. 3, within each Zone Period, sub-frames may be used for "location beacon" transmission. As used herein, the term "location beacon" will be used to designate the physical structure of UE signaling on the Sidelink and/or Uplink (e.g., to base station 125) channel that is used to communicate the signal location parameters. The sub-frames used for location beacon transmission may begin after Zone Start Offset from the Zone Period boundaries (at the dashed lines labeled as 320). The Sub-frame Bitmap "0101010100" is illustrated, which may indicate that the second, fourth, sixth, and eighth sub-frames after the starting point (i.e., the sub-frames, after the dashed lines 320, corresponding to "1" in the bitmap) may be used for transmission of the location beacons.

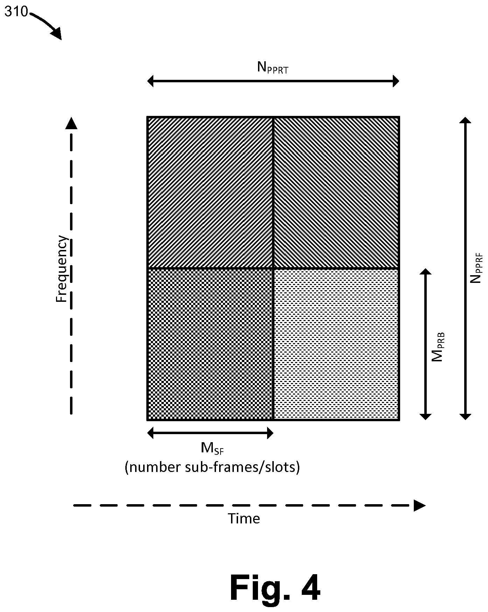

Referring back to Fig. 2, process 200 may include communicating, using the configured spectrum, location beacons (block 220). Consistent with aspects described herein, the location beacons may be structured using one of a number of options. The particular structure of a location beacon to use may be configured ahead of time and/or communicated by eNB 125 as part of configuration relating to position determination. The location beacons may generally be used to communicate: (1) demodulation reference signals (DMRS) that may be used, to estimate the signal quality/strength of a channel, so that payload data and/or to Sidelink positioning reference signals (timing information) may be decoded; (2) payload data that may include signal location parameters such as UE identity, UE location coordinates, UE movement characteristics, etc,; and/or (3) Sidelink positioning reference signals which may be used to derive timing-based signal location parameters (e.g., timing relating to the propagation of radio signals). The timing-based signal location parameters may include, for example, signal ToA relative to a synchronized reference clock; signal time of flight, TDOA, or other timing-based signal location parameters. The different types of location beacons, and the information carried by the different types of location beacons, will be described in more detail below with reference to Figs. 4-7.

Process 200 may further include, based on D2D communication of the location beacons, estimating the location of a UE (block 230). As previously mentioned, signal location parameters may be obtained from the location beacons. In some implementations, the signal location parameters may be transmitted, by UEs 110-114 and via wireless network 120 (e.g., via a cellular network), to location server 160. Location server 160 may use the signal location parameters obtained from a number of sources (e.g., a number of UEs and/or eNBs) to obtain the location of a particular "target" UE. For example, location server 160 may use multilateration-based techniques, based on signal location parameters received from UEs 110-114 and/or eNB(s) 125, to obtain a relatively accurate three-dimensional location of the target UE. Alternatively or additionally, in some implementations, location determination may be performed locally by the target UE based on signal location parameters obtained from location beacons received by the target UE and/or based on signal location parameters received via other techniques, such as by receiving signal location parameters forwarded, by other UEs and/or eNBs, via bearers communicated over Sidelink channels or wireless network 120.

The structure of different types of Location Beacons will next be described. Consistent with aspects described herein, the location beacons may be structured using one of three signaling layer options, referred to herein as "Location Beacon Type 1," "Location Beacon Type 2," and "Location Beacon Type 3." The contents of the three types of location beacons are summarized in Table I.

| **TABLE I** | | | |
|---|---|---|---|
| **Location Beacon Type** | **Sidelink Positioning Reference Signal** | **Signal Location Parameters in Payload** | **DMRS** |
| Type 1 | No | yes | yes |
| Type 2 | Yes | yes | yes |
| Type 3 | Yes | no | no |

As shown in Table I, a Type 1 location beacon may include signal location parameters in payload data and may use DMRS. DMRS may be used to estimate channel quality to enable decoding of the signal location parameters in the payload data. A Type 2 location beacon may include Sidelink positioning reference signals (SPRS), signal location parameters in payload data, and may use DMRS. A Type 3 location beacon may include Sidelink positioning reference signals but not include signal location parameters in payload data or use DMRS.

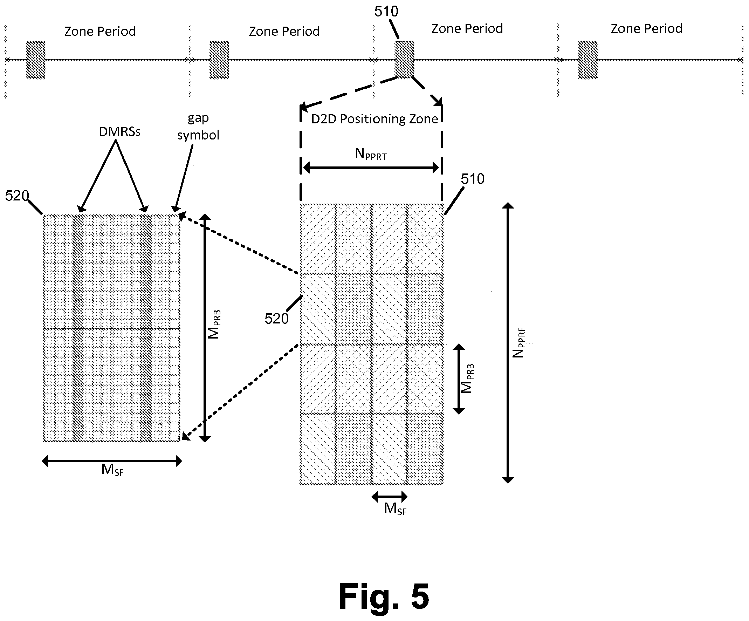

Figs. 4 and 5 are diagrams that conceptually illustrate a Type 1 location beacon. In Fig. 4, concepts relating to a single instance of a D2D positioning zone 310 are illustrated. D2D positioning zone 310 may be thought of as having both a frequency dimension and a time dimension. As shown, assume D2D positioning zone 310 is formed from a number of individual positioning payload resources in time (N_{PPRT} payload resources, where N_{PPRT} equals two in Fig. 4) and a number of positioning payload resources in frequency (N_{PPRF} payload resources, where N_{PPRF} equals two in Fig. 4). The payload resources can be conceptualized as forming a grid (e.g., a 2x2 grid in Fig. 4) of possible payload resource blocks. Each positioning payload resource in time may be composed from M_{SF} LTE sub-frames or slots (where M_{SF} is a positive integer) or any other time units of different granularity. Similarly, the positioning payload resource in frequency may be composed from M_{PRB} LTE physical resource blocks (where M_{PRB} is a positive integer) or any other frequency units of different granularity.

Different UEs 110-114 may use different resource blocks of D2D positioning zone 310 to transmit location beacons. For example, a first UE may use a resource block associated with the N_{PPRT}, N_{PPRF} pair of (1, 1) and another UE first UE may use a resource block associated with the N_{PPRT}, N_{PPRF} pair of (1, 2). In one implementation, the resource blocks may be autonomously selected by UEs 110-114, such as by random selection, pseudorandom selection, or selection based on signal quality measurements or other measurements. Alternatively or additionally, assigning different resource blocks to different UEs may be performed with the assistance of wireless network 120 (e.g., such as by configuration information broadcast by eNB 125).

In Fig. 5, a D2D positioning zone 510 is shown in which a particular resource block 520 is illustrated in additional detail. For resource block 520, M_{SF} is equal to fourteen and M_{PRB} is equal to 24. Two slots, at M_{SF} equal to four and eleven may be used for DMRSs. The slot at M_{SF} equal to fourteen may be used to transmit a gap symbol. The remaining slots of resource block 520 may be used to transmit symbols that are part of the payload data that is used to transmit signal location parameters.

As mentioned, for a Type 1 location beacon, signal location parameters may be encoded in the payload data. The signal location parameters may relate to information used to implement a position location protocol in environment 100 and may include, for example, one or more of the following:
- Geographic coordinates of a UE (either relative or absolute coordinates and either two-dimensional or three-dimensional coordinates);
- Movement characteristics of a UE (e.g. velocity [speed + movement direction], acceleration, etc.);
- Cell identity information relating to the serving and/or reference cell associated with a UE;
- Signal propagation timing values associated with a UE, such as a Timing Advance (TA), time of flight, Round Trip Time (RTT) of a signal from the UE to a base station, RTT/2 (one-half the RTT), or other timing related values that can be used to estimate a range between the UE and a base station associated with a serving or reference cell;
- Reference time information (e.g. a notion of absolute or system reference time);
- Time stamp information (e.g. the relative or absolute time instance when a UE sends the location beacon at an antenna port of the UE);
- Transmit power;
- An indication of the reference signal received power from serving, reference, or neighboring cells or terminals, and/or an indication of reference signal received quality;
- Reference Signal Timing Difference (RSTD) between cells or anchor UEs and a list of detected anchor UEs;
- Information about a reference node;
- Forward/reverse timing estimation information for two-way timing protocols and range estimation;
- Uncertainty metrics relating to a quality of measured parameters;
- Expected window/range for time of arrival, angle of arrival;
- Other application layer payload or application layer identity information; and
- Global Navigation Satellite System (GNSS) (e.g., GPS) assistance information.

In some implementations, the location beacons may be transmitted using the existing Physical Sidelink Discovery Channel (PSDCH). Alternatively or additionally, the location beacons may be transmitted using a new channel, referred to as the Physical Sidelink Location Channel (PSLCH) herein. The PSDCH channel design uses a fixed physical structure for transmission of device discovery information, in which the device discovery is performed using two PRBs and one or two LTE subframes. The restriction, in PSDCH, of using two PRBs may not provide accurate timing estimation due to rather narrow bandwidth of the DMRS signals. In one implementation, PSLCH may be defined using a configurable bandwidth for transmission of the location beacons. Also, with PSLCH, the parameters N_{PPRT}, N_{PPRF}, M_{SF}, and M_{PRB} may be made configurable by wireless network 120.

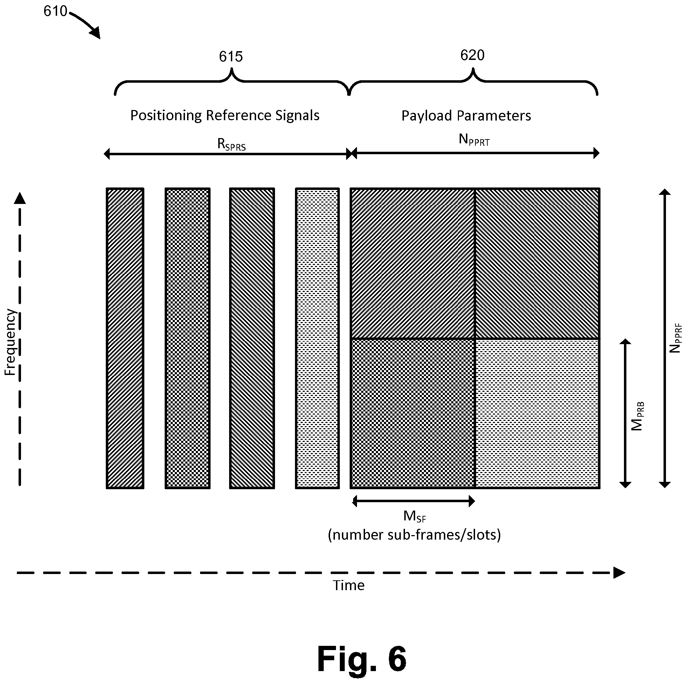

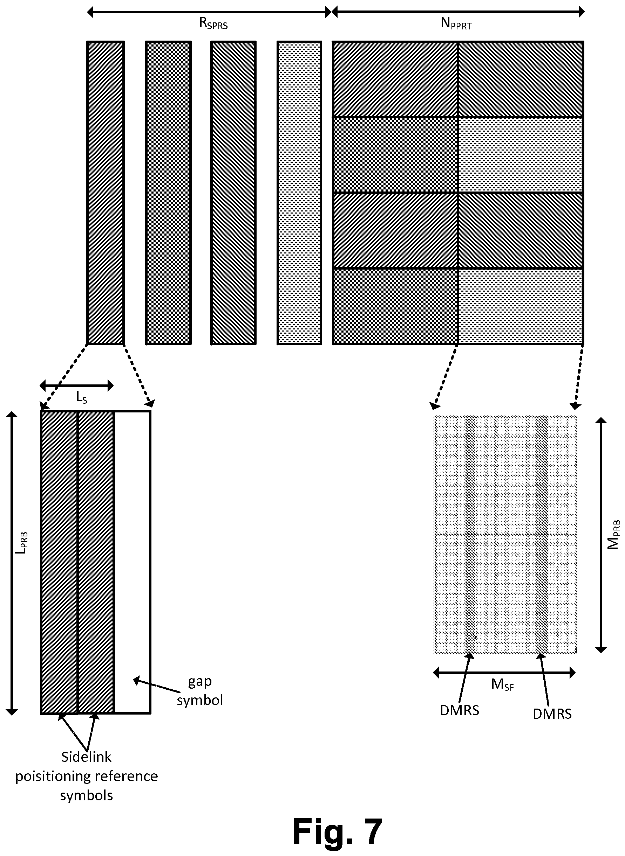

The structure of a Type 2 location beacon will next be described. Figs. 6 and 7 are diagrams that conceptually illustrate a Type 2 location beacon. In Fig. 6, the physical structure of D2D positioning zone 610 may be subdivided into two subzones, labeled as subzones 615 and 620. Subzone 615 may be used to transmit Sidelink positioning reference signals (SPRSs) and subzone 620 may be used to transmit payload data (e.g., including content similar to those discussed for the Type 1 location beacon). Subzone 615 may either precede subzone 620 or follow subzone 620. In the latter case, a target UE, upon detection of an anchor terminal, such as a fixed-position UE that is assisting in D2D positioning, may improve the accuracy of the signal location parameters obtained from the payload data by processing the Sidelink positioning reference signals. Alternatively, the target UE may attempt to first detect subzone 620 and then decode only those payload resources that correspond to the detected Sidelink positioning reference signals. There may be a one-to-one mapping between the positioning reference signal resources or sequences and the positioning payload resources, so that by detecting one, the target UE may know the location of the other.

With the Type 2 location beacon, the signal location parameters may be estimated based on both Sidelink positioning reference signals and the payload parameter. As mentioned, the payload may carry information similar to that described for the Type 1 location beacons.

The physical structure of the positioning reference signals may be different relative to the payload and DMRS signals. For instance, and as illustrated in Fig. 6, the bandwidth of the Sidelink positioning reference signals may be increased relative to the bandwidth of the resource blocks for the payload parameters. In one implementation, the bandwidth of the Sidelink positioning reference signals may be configurable using higher layer signaling. In some implementations, the Sidelink positioning reference signal may not occupy the whole subframe and instead utilize several symbols. This may increase the degree of freedom in terms of time division multiplexing, (i.e. orthogonality in time) and thus facilitate more accurate determination of the signal location parameters due to the possibility of transmitting in a larger bandwidth. In some implementations, transmission of the Sidelink positioning reference signal may require at least three symbol, in which at least a part of the first symbol may be used to adjust Automatic Gain Control (AGC) settings and, at the end of the Sidelink positioning reference signal transmission, additional symbols may be added in order to allow some time for transmit-receive or receive-transmit switching.

In Fig. 7, a D2D positioning zone 710 is shown, including subzones 715 and 720, in which a particular resource block 730, corresponding a resource block used to transmit Sidelink positioning reference signals, and a resource block 740, corresponding a resource block used to transmit payload data, is illustrated. For resource block 730, the number of symbols used in transmission of the Sidelink positioning reference signals is illustrated by the parameter Lₛ. The number of allocated physical resource blocks used in transmission of the Sidelink positioning reference signals is illustrated by the parameter L_{PRB}. Resource block 740 may be defined by the parameters M_{SF} and M_{PRB}, which correspond to the same parameters used in a Type 1 location beacon.

A number of physical sequences for Sidelink positioning reference signal transmission may potentially be used, including: an existing DMRS signal with larger bandwidth, Sounding Reference Signals, Physical Random Access Channel (PRACH) signals, and/or Sidelink Synchronization signals (primary and secondary). Alternatively or additionally, new signals may be designed based on Zadoff-Chu sequences, Golay sequences, complementary Golay sequences, m-sequences or other pseudorandom sequences with good auto and cross correlation properties. Parameters for the Sidelink positioning reference signals, such as L_{PRB} and Ls, may be configured through higher layer signaling (e.g. radio resource control (RRC) or system information block (SIB) signaling) or may be predefined (e.g., in a specification).

The structure of a Type 3 location beacon will next be described. For a Type 3 location beacon, the signal location parameters may be derived from the Sidelink positioning reference signals (and not from payload data). The Sidelink positioning reference signals from different UEs may be multiplexed in a time-frequency manner allowing efficient interference management, resource utilization and half-duplex resolution. The allocation granularity in time and frequency may be controlled, through higher layer signaling, by the parameters L_{PRB} and Ls, in a manner similar to that discussed with respect to the Type 2 location beacon. Alternatively or additionally, the values for L_{PRB} and Ls may be predefined.

In general, a relatively wide signal bandwidth may be configured for the Sidelink positioning reference signal transmission, which may lead to better timing resolution. Assuming constant signal-to-noise ratio conditions, a higher bandwidth can result in enhanced accuracy. The frequency position of each transmission may be changed in time in order to improve timing estimation accuracy when multi-shot processing is applied at the receiver.

In Type 3 location beacons, the detected Sidelink positioning reference signals may be encoded to indicate the identity of the transmitter in order to differentiate different transmitting UEs. Alternatively or additionally, a predefined relation between spectrum resources (i.e. frequency and time coordinates of Sidelink positioning reference signal allocation) and transmission point (e.g., UE) identity may be known. For example, eNB 125 may broadcast a map that associates transmission points with time-frequency resources and/or sequences.

Wireless network 120, such as via eNB 125, may activate some of UEs 110-114 (e.g. anchor UEs/terminals with fixed positions and known coordinates) to transmit Sidelink positioning reference signals using predefined resources and/or using predefined transmission sequences. eNB 125 may also request that a UE, such as one of UEs 110-114 (e.g., a particular target UE), measure the signal location parameters for each Sidelink positioning reference signal time-frequency resource and/or sequence and then report the results of the measurements back to eNB 125 to facilitate further estimation of the UE coordinates by location server 160. In some of the scenarios, eNB 125 may assign synchronization sources to periodically transmit Sidelink synchronization signals (primary and secondary), timing reference signals, or DMRS signals to perform measurements of signal location parameters at the target UEs.

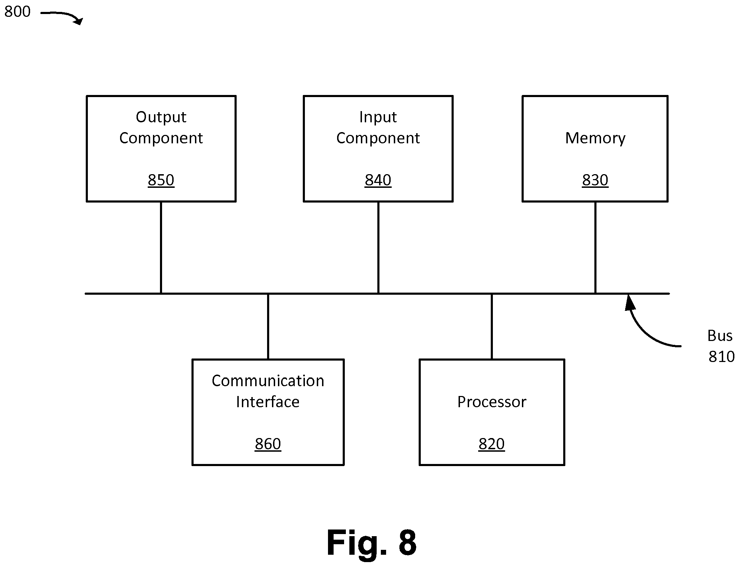

Fig. 8 is a diagram of example components of a device 800. Each of the devices illustrated in Fig. 1 may include one or more devices 800. Device 800 may include bus 810, processor 820, memory 830, input component 840, output component 850, and communication interface 860. In another implementation, device 800 may include additional, fewer, different, or differently arranged components.

Bus 810 may include one or more communication paths that permit communication among the components of device 800. Processor 820 may include a processor, microprocessor, or processing logic or circuitry that may interpret and execute instructions. Memory 830 may include any type of dynamic storage device that may store information and instructions for execution by processor 820, and/or any type of non-volatile storage device that may store information for use by processor 820. The term "processing circuitry," as used herein, may generally refer to a processor that performs functions by executing instructions and/or to hardwired logic in which the functionality of the hardwired logic is defined by the arrangement of the electrical circuits associated with the hardwired logic.

Input component 840 may include a mechanism that permits an operator to input information to device 800, such as a keyboard, a keypad, a button, a switch, etc. Output component 850 may include a mechanism that outputs information to the operator, such as a display, a speaker, one or more light emitting diodes (LEDs), etc.

Communication interface 860 may include any transceiver-like mechanism that enables device 800 to communicate with other devices and/or systems. For example, communication interface 860 may include an Ethernet interface, an optical interface, a coaxial interface, or the like. Communication interface 860 may include a wireless communication device, such as an infrared (IR) receiver, a cellular radio, a Bluetooth radio, or the like. The wireless communication device may be coupled to an external device, such as a remote control, a wireless keyboard, a mobile telephone, etc. In some embodiments, device 800 may include more than one communication interface 860. For instance, device 800 may include an optical interface and an Ethernet interface.

Device 800 may perform certain operations described above. Device 800 may perform these operations in response to processor 820 executing software instructions stored in a computer-readable medium, such as memory 830. A computer-readable medium may be defined as a non-transitory memory device. A memory device may include space within a single physical memory device or spread across multiple physical memory devices. The software instructions may be read into memory 830 from another computer-readable medium or from another device. The software instructions stored in memory 830 may cause processor 820 to perform processes described herein. Alternatively, hardwired circuitry may be used in place of or in combination with software instructions to implement processes described herein. Thus, implementations described herein are not limited to any specific combination of hardware circuitry and software.

In the preceding specification, various preferred embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

For example, while a series of blocks have been described with regard to Fig. 2, the order of the blocks may be modified in other implementations. Further, non-dependent blocks may be performed in parallel.

It will be apparent that example aspects, as described above, may be implemented in many different forms of software, firmware, and hardware in the implementations illustrated in the figures. The actual software code or specialized control hardware used to implement these aspects should not be construed as limiting. Thus, the operation and behavior of the aspects were described without reference to the specific software code--it being understood that software and control hardware could be designed to implement the aspects based on the description herein.

Further, certain portions of the invention may be implemented as "logic" that performs one or more functions. This logic may include hardware, such as an ASIC or a FPGA, or a combination of hardware and software.

Even though particular combinations of features are recited in the claims and/or disclosed in the specification, these combinations are not intended to limit the invention. In fact, many of these features may be combined in ways not specifically recited in the claims and/or disclosed in the specification.

No element, act, or instruction used in the present application should be construed as critical or essential to the invention unless explicitly described as such. Further, the phrase "based on" is intended to mean "based, at least in part, on" unless explicitly stated otherwise.

## Claims

1. User Equipment, UE, (110; 112; 114) comprising processing circuitry to:
connect with a cellular network (120);
detect or connect with one or more additional UEs to form a direct connection with the one or more additional UEs (110; 112; 114);
receive, from the cellular network (120), information allocating a portion of radio spectrum resources, as radio spectrum resources that are dedicated to exchanging signal location parameters that relate to information relevant to UE location determination;
receive, via the direct connection with the one or more additional UEs (110; 112; 114) and using the allocated portion of the radio spectrum resources, one or more of the signal location parameters; and
determine, based on the received one or more of the signal location parameters, a location of the UE, wherein the information allocating the portion of the radio spectrum resources defines a periodically occurring device-to-device, D2D, positioning zone (310;
510; 610; 710) that is represented by:
a Zone Period value that relates to a period with which the D2D positioning zone occurs, the Zone Period being defined with respect to a System Frame Number, SFN, of a cell of the cellular network; and
a Zone Start Offset value that relates to an offset relative to an instance of the Zone Period, wherein the periodically occurring D2D positioning zone (310; 510; 610; 710) is additionally represented by:
a Sub-frame Bitmap that indicates particular sub-frames that are to be used to exchange the signal location parameters; and
a Zone End Offset value that indicates an ending location of the Sub-frame Bitmap.

2. The UE of claim 1, wherein the information allocating the portion of the radio spectrum resources defines a periodically occurring device-to-device, D2D, positioning zone (310; 510; 610; 710), and wherein the signal location parameters are received as part of location beacons that are transmitted using the D2D positioning zones.

3. The UE of claim 2, wherein the D2D positioning zone (310; 510; 610; 710) is defined during D2D discovery, using D2D control or data resources, or using cellular uplink or downlink spectrum resources.

4. The UE of claim 2, wherein the location beacons each include:
signal location parameters that are encoded in payload data; and
demodulation reference signals that are used to decode the payload data.

5. The UE of claim 4, wherein the signal location parameters that are encoded in the payload data include:
geographic coordinate information;
identification information of cells associated with the cellular network (120);
information relating to signal transmit power;
movement characteristics of the UE;
measurements of signal location parameters;
transmission/reception timestamps; or
information relating to a system reference time.

6. A method implemented by a mobile device, the method comprising:
connecting with a cellular network (120);
connecting with a one or more additional mobile devices via Sidelink connections with the one or more additional UEs (110; 112; 114);
receiving, from the cellular network (120), information allocating a portion of radio spectrum resources, as radio spectrum resources that are dedicated to exchanging signal location parameters that relate to information relevant to mobile device location determination;
receiving, via one of the Sidelink connections and using the allocated portion of the radio spectrum resources, one or more of the signal location parameters; and
determining, based on the received one or more of the signal location parameters, a location of the mobile device,
wherein the information allocating the portion of the radio spectrum resources defines a periodically occurring device-to-device, D2D, positioning zone (310; 510; 610; 710) that is represented by:
a Zone Period value that relates to a period with which the D2D positioning zone occurs, the Zone Period being defined with respect to a System Frame Number, SFN, of a cell of the cellular network; and
a Zone Start Offset value that relates to an offset relative to an instance of the Zone Period, wherein the periodically occurring D2D positioning zone is additionally represented by:
a Sub-frame Bitmap that indicates particular sub-frames that are to be used to exchange the signal location parameters; and
a Zone End Offset value that indicates an ending location of the Sub-frame Bitmap.

7. The method of claim 6, wherein determining the location of the mobile device includes transmitting the received one or more of the signal location parameters to a location server.

8. The method of claim 6, wherein the information allocating the portion of the radio spectrum resources defines a periodically occurring device-to-device, D2D, positioning zone (310; 510; 610; 710), and wherein the signal location parameters are received as part of location beacons that are transmitted using the D2D positioning zones.

## Patentansprüche

1. Benutzerausrüstung, UE, (110: 112; 114), umfassend Verarbeitungsschaltung zum:
Verbinden mit einem zellulären Netzwerk (120);
Erkennen oder Verbinden mit einer oder mehrerer zusätzlicher UEs zum Bilden einer direkten Verbindung mit den einen oder mehreren zusätzlichen UEs (110; 112; 114);
Empfangen, von dem zellulären Netzwerk (120), von Informationen, die einen Abschnitt von Funkspektrumsressourcen als Funkspektrumsressourcen zuteilen, die zum Austauschen von Signalstandortparameter dediziert sind, die sich auf Informationen beziehen, die für UE Standortbestimmung relevant sind;
Empfangen, mittels der direkten Verbindung mit der einen oder den mehreren zusätzlichen UEs (110; 112; 114) und unter Verwenden des zugeteilten Abschnitts der Funkspektrumsressourcen, eines oder mehrerer der Signalstandortparameter;
Bestimmen, basierend auf den empfangenen einen oder mehreren Signalstandortparametern, eines Standorts der UE, wobei die Informationen, die den Abschnitt der Funkspektrumsressourcen zuteilen, eine periodisch auftretende Vorrichtung-zu-Vorrichtung, D2D, Positionierungszone (310; 510; 610; 710) definieren, die dargestellt wird durch:
einen Zone Period Wert, der sich auf eine Periode bezieht, mit der die D2D Positionierungszone auftritt, wobei die Zone Period in Bezug auf eine System Frame Number, SFN, einer Zelle des zellulären Netzwerks definiert wird; und
einen Zone Start Offset Wert, die sich auf einen Versatz relativ zu einer Instanz der Zone Period bezieht, wobei die periodisch auftretende D2D Positionierungszone (310; 510; 610; 710) zusätzlich dargestellt wird durch:
eine Sub-frame Bitmap, die bestimmte Subrahmen anzeigt, die zum Austauschen der Signalstandortparameter verwendet werden sollen; und
einen Zone End Offset Wert, der einen Beendigungsstandort der Sub-frame Bitmap anzeigt.

2. UE nach Anspruch 1, wobei die Informationen, die den Abschnitt der Funkspektrumsressourcen zuteilen, eine periodisch auftretenden Vorrichtung-zu-Vorrichtung, D2D, Positionierungszone (310; 510; 610; 710) definieren, und wobei die Signalstandortparameter als Teil von Standortbaken empfangen werden, die unter Verwenden der D2D Positionierungszonen übertragen werden.

3. UE nach Anspruch 2, wobei die D2D Positionierungszone (310; 510; 610; 710) definiert wird während D2D Entdeckung, unter Verwenden von D2D Steuerungs- oder Datenressourcen, oder unter Verwenden von zellulären Uplink- oder Downlinkspektrumsressourcen.

4. UE nach Anspruch 2, wobei die Standortbaken jeweils beinhalten:
Signalstandortparameter, die in Nutzlastdaten verschlüsselt sind; und
Demodulationsreferenzsignale, die verwendet werden zum Entschlüsseln der Nutzlastdaten.

5. UE nach Anspruch 4, wobei die Signalstandortparameter, die in den Nutzlastdaten verschlüsselt sind, beinhalten:
Geografische Koordinateninformationen;
Identifikationsinformationen von Zellen, die mit dem zellulären Netzwerk (120) assoziiert sind;
Informationen bezüglich der Signalübertragungsleistung;
Bewegungscharakteristiken der UE;
Messungen von Signalstandortparametern;
Übertragungs-/Empfangszeitstempel; oder
Informationen bezüglich einer Systemreferenzzeit.

6. Verfahren, das durch eine mobile Vorrichtung implementiert wird, das Verfahren umfassend:
Verbinden mit einem zellulären Netzwerk (120);
Verbinden mit einer oder mehrerer zusätzlicher mobiler Vorrichtungen mittels Sidelink Verbindungen mit den einen oder mehreren zusätzlichen UEs (110; 112; 114);
Empfangen, von dem zellulären Netzwerk (120), von Informationen, die einen Abschnitt von Funkspektrumsressourcen als Funkspektrumsressourcen zuteilen, die zum Austauschen von Signalstandortparameter dediziert sind, die sich auf Informationen beziehen, die für mobile Vorrichtungs-Standortbestimmung relevant sind;
Empfangen, mittels einer der Sidelink Verbindungen und unter Verwenden des zugeteilten Abschnitts von Funkspektrumsressourcen, eines oder mehrerer der Signalstandortparameter; und
Bestimmen, basierend auf den empfangenen einen oder mehreren Signalstandortparametern, eines Standorts der mobilen Vorrichtung,
wobei die Informationen, die den Abschnitt der Funkspektrumsressourcen zuteilen, eine periodisch auftretende Vorrichtung-zu-Vorrichtung, D2D, Positionierungszone (310; 510; 610; 710) definieren, die dargestellt wird durch:
einen Zone Period Wert, der sich auf eine Periode bezieht, mit der die D2D Positionierungszone auftritt, wobei die Zone Period in Bezug auf eine System Frame Number, SFN, einer Zelle des zellulären Netzwerks definiert wird; und
einen Zone Start Offset Wert, die sich auf einen Versatz relativ zu einer Instanz der Zone Period bezieht,
wobei die periodisch auftretende D2D Positionierungszone zusätzlich dargestellt wird durch:
eine Sub-frame Bitmap, die bestimmte Subrahmen anzeigt, die zum Austauschen der Signalstandortparameter verwendet werden sollen; und
einen Zone End Offset Wert, der einen Beendigungsstandort der Sub-frame Bitmap anzeigt.

7. Verfahren nach Anspruch 6, wobei Bestimmen des Standorts der mobilen Vorrichtung Übertragen der empfangenen einen oder mehreren der Signalstandortparameter an einen Standortserver beinhaltet.

8. Verfahren nach Anspruch 6, wobei die Informationen, die den Abschnitt der Funkspektrumsressourcen zuteilen, eine periodisch auftretende Vorrichtung-zu-Vorrichtung, D2D, Positionierungszone (310; 510; 610; 710) definieren, und wobei die Signalstandortparameter als Teil von Standortbaken empfangen werden, die unter Verwenden der D2D Positionierungszonen übertragen werden.

## Revendications

1. Équipement utilisateur, UE, (110 ; 112 ; 114) comprenant un ensemble de circuits de traitement pour :
se connecter avec un réseau cellulaire (120) ;
détecter ou se connecter avec un ou plusieurs UE additionnels pour former une connexion directe avec les un ou plusieurs UE additionnels (110 ; 112 ; 114) ;
recevoir, en provenance du réseau cellulaire (120), une information allouant une portion de ressources de spectre radio, en tant que ressources de spectre radio qui sont dédiées à l'échange de paramètres de localisation de signal qui se rapportent à une information concernant la détermination de localisation d'UE ;
recevoir, via la connexion directe avec les un ou plusieurs UE additionnels (110 ; 112 ; 114) et en utilisant la portion allouée des ressources de spectre radio, un ou plusieurs des paramètres de localisation de signal ; et
déterminer, sur la base des un ou plusieurs des paramètres de localisation de signal reçus, une localisation de l'UE, dans lequel l'information allouant la portion des ressources de spectre radio définit une zone de positionnement de dispositif à dispositif, D2D, se produisant périodiquement (310 ; 510 ; 610 ; 710) qui est représentée par :
une valeur de période de zone qui se rapporte à une période avec laquelle la zone de positionnement D2D se produit, la période de zone étant définie par rapport à un numéro de trame système, SFN, d'une cellule du réseau cellulaire ; et
une valeur de décalage de début de zone qui se rapporte à un décalage relatif à une instance de la période de zone, dans lequel la zone de positionnement D2D se produisant périodiquement (310 ; 510 ; 610 ; 710) est additionnellement représentée par :
un bitmap de sous-trame qui indique des sous-trames particulières qui doivent être utilisées pour échanger les paramètres de localisation de signal ; et
une valeur de décalage de fin de zone qui indique une localisation de fin du bitmap de sous-trame.

2. L'UE selon la revendication 1, dans lequel l'information allouant la portion des ressources de spectre radio définit une zone de positionnement de dispositif à dispositif, D2D, se produisant périodiquement (310 ; 510 ; 610 ; 710), et dans lequel les paramètres de localisation de signal sont reçus en tant que partie de balises de localisation qui sont transmises en utilisant les zones de positionnement D2D.

3. L'UE selon la revendication 2, dans lequel la zone de positionnement D2D (310 ; 510 ; 610 ; 710) est définie pendant la découverte D2D, en utilisant des ressources de contrôle ou de donnée D2D, ou en utilisant des ressources de spectre de liaison montante ou de liaison descendante cellulaire.

4. L'UE selon la revendication 2, dans lequel les balises de localisation incluent chacune :
des paramètres de localisation de signal qui sont encodés dans une donnée de charge utile ; et
des signaux de référence de démodulation qui sont utilisés pour décoder la donnée de charge utile.

5. L'UE selon la revendication 4, dans lequel les paramètres de localisation de signal qui sont encodés dans la donnée de charge utile incluent :
une information de coordonnées géographiques ;
une information d'identification de cellules associées au réseau cellulaire (120) ;
une information relative à une puissance de transmission de signal ;
des caractéristiques de déplacement de l'UE ;
des mesures de paramètres de localisation de signal ;
des estampilles temporelles de transmission/réception ; ou
une information relative à une heure de référence système.

6. Un procédé mis en œuvre par un dispositif mobile, le procédé comprenant :
la connexion avec un réseau cellulaire (120) ;
la connexion avec un ou plusieurs dispositifs mobiles additionnels via des connexions Sidelink avec les un ou plusieurs UE additionnels (110 ; 112 ; 114) ;
la réception, en provenance du réseau cellulaire (120), d'une information allouant une portion de ressources de spectre radio, en tant que ressources de spectre radio qui sont dédiées à l'échange de paramètres de localisation de signal qui se rapportent à une information concernant la détermination de localisation de dispositif mobile ;
la réception, via l'une des connexions Sidelink et en utilisant la portion allouée des ressources de spectre radio, d'un ou plusieurs des paramètres de localisation de signal ; et
la détermination, sur la base des un ou plusieurs des paramètres de localisation de signal reçus, d'une localisation du dispositif mobile,
dans lequel l'information allouant la portion des ressources de spectre radio définit une zone de positionnement de dispositif à dispositif, D2D, se produisant périodiquement (310 ; 510 ; 610 ; 710) qui est représentée par :
une valeur de période de zone qui se rapporte à une période avec laquelle la zone de positionnement D2D se produit, la période de zone étant définie par rapport à un numéro de trame système, SFN, d'une cellule du réseau cellulaire ; et
une valeur de décalage de début de zone qui se rapporte à un décalage relatif à une instance de la période de zone, dans lequel la zone de positionnement D2D se produisant périodiquement est additionnellement représentée par :
un bitmap de sous-trame qui indique des sous-trames particulières qui doivent être utilisées pour échanger les paramètres de localisation de signal ; et
une valeur de décalage de fin de zone qui indique une localisation de fin du bitmap de sous-trame.

7. Le procédé selon la revendication 6, dans lequel la détermination de la localisation du dispositif mobile inclut la transmission des un ou plusieurs des paramètres de localisation de signal reçus à un serveur de localisation.

8. Le procédé selon la revendication 6, dans lequel l'information allouant la portion des ressources de spectre radio définit une zone de positionnement de dispositif à dispositif, D2D, se produisant périodiquement (310 ; 510 ; 610 ; 710), et dans lequel les paramètres de localisation de signal sont reçus en tant que partie de balises de localisation qui sont transmises en utilisant les zones de positionnement D2D.
